# EUROPEAN PATENT APPLICATION

(11) **EP 4 317 055 A1**
(43) Date of publication of application: **07.02.2024**
(21) Application number: 22774837.3
(22) Date of filing: 21.02.2022
(51) Int. Cl.: C01B 3/30, B01J 8/26

(54) **HYDROGEN PRODUCTION DEVICE**

(30) Priority: 25.03.2021 JP 2021051543
(71) Applicant: IHI Corporation, Tokyo 135-8710 (JP)
(72) Inventor: MIYAURA, Takuto, Tokyo 135-8710 (JP); ITO, Takamasa, Tokyo 135-8710 (JP); TSUBOI, Yosuke, Tokyo 135-8710 (JP); LIU, Yuping, Tokyo 135-8710 (JP)
(74) Representative: TBK
(86) International application number: PCT/JP2022/006987
(87) International publication number: WO 2022/202037

(57) **Abstract**

A hydrogen production apparatus (100) includes: a first heating furnace (110) including: a first accommodating tank in which a moving bed of a catalyst containing any one or more of iron, nickel, copper, and aluminum is formed; and a heating tube, which is provided in the first accommodating tank, and through which a heat medium passes; a second heating furnace (120) including: a burner that burns fuel to generate an exhaust gas; and a second accommodating tank in which a fluidized bed of the catalyst discharged from the first heating furnace is formed with the exhaust gas; and a furnace for the pyrolysis (140) including a third accommodating tank in which a fluidized bed of the catalyst discharged from the second heating furnace is formed with a raw material gas containing hydrocarbon.

## Description

### Technical Field

The present disclosure relates to a hydrogen production apparatus. This application claims the benefit of priority to Japanese Patent Application No. 2021-051543 filed on March 25, 2021, and contents thereof are incorporated herein.

### Background Art

As a technology for producing hydrogen, there has been known a technology for subjecting hydrocarbon, such as methane, to steam reforming. However, the steam reforming of hydrocarbon produces carbon dioxide in a production process of hydrogen. Thus, it is conceived to produce hydrogen without emitting carbon dioxide by subjecting hydrocarbon to pyrolysis to generate carbon as a solid.

As a technology for subjecting hydrocarbon to pyrolysis, there is a disclosure of an apparatus including a reaction furnace, a raw material gas supply source, and a heating unit provided outside the reaction furnace (e.g., Patent Literature 1). The reaction furnace accommodates a catalyst. The raw material gas supply source supplies hydrocarbon to the reaction furnace. The heating unit is provided on the periphery of the reaction furnace and heats the inside of the reaction furnace.

### Citation List

### Patent Literature

Patent Literature 1: JP 5862559 B2

### Summary

### Technical Problem

The pyrolysis of hydrocarbon progresses efficiently at 800°C or more through use of a catalyst. However, the pyrolysis of hydrocarbon is an endothermic reaction, and hence it is needed to supply heat from outside. Thus, in the technology for heating the reaction furnace from outside as in Patent Literature 1 described above, it is needed to heat a furnace wall of the reaction furnace to 1,000°C or more in order to heat the inside of the reaction furnace to 800°C or more. In this case, the reaction furnace is needed to be formed of a material having a heat resistance of 1,000°C or more, resulting in a problem of an increase in cost needed for the reaction furnace.

In view of the above-mentioned problem, the present disclosure has an object to provide a hydrogen production apparatus capable of subjecting hydrocarbon to pyrolysis at low cost.

### Solution to Problem

In order to solve the above-mentioned problem, according to one aspect of the present disclosure, there is provided a hydrogen production apparatus, including: a first heating furnace including: a first accommodating tank in which a moving bed of a catalyst containing any one or more of iron, nickel, copper, and aluminum is formed; and a heating tube, which is provided in the first accommodating tank, and through which a heat medium passes; a second heating furnace including: a burner that burns fuel to generate an exhaust gas; and a second accommodating tank in which a fluidized bed of the catalyst discharged from the first heating furnace is formed with the exhaust gas; and a furnace for pyrolysis including a third accommodating tank in which a fluidized bed of the catalyst discharged from the second heating furnace is formed with a raw material gas containing hydrocarbon.

Further, the hydrogen production apparatus may further include a heat exchanger for the heat medium that subjects the catalyst discharged from the third accommodating tank of the furnace for pyrolysis and the heat medium to heat exchange. The heat medium subjected to heat exchange by the heat exchanger for the heat medium may pass through the heating tube of the first heating furnace.

Further, the burner of the second heating furnace may use the raw material gas as the fuel.

Further, the hydrogen production apparatus may further include a hydrogen separation unit that separates hydrogen from a mixed gas fed from the third accommodating tank of the furnace for pyrolysis. The burner of the second heating furnace may use the hydrogen separated by the hydrogen separation unit as the fuel.

Further, the catalyst discharged from the furnace for pyrolysis may be guided to the second accommodating tank of the second heating furnace, and the burner of the second heating furnace may burn the fuel with air having a theoretical air ratio or less.

Further, the hydrogen production apparatus may further include a raw material heat exchanger that subjects any one or both of the exhaust gas fed from the second accommodating tank of the second heating furnace and a mixed gas fed from the third accommodating tank of the furnace for pyrolysis and the raw material gas to heat exchange. The third accommodating tank of the furnace for pyrolysis may form the fluidized bed of the catalyst with the raw material gas subjected to heat exchange by the raw material heat exchanger.

### Effects

According to the present disclosure, it is possible to subject hydrocarbon to pyrolysis at low cost.

### Brief Description of Drawings

FIG. 1 is a diagram for illustrating a hydrogen production apparatus according to an embodiment.
FIG. 2 is a diagram for illustrating a first heating furnace and a second heating furnace.
FIG. 3 is a diagram for illustrating a furnace for the pyrolysis and a heat exchanger for the heat medium.

### Description of Embodiments

Now, with reference to the attached drawings, an embodiment of the present disclosure is described in detail. The dimensions, materials, and other specific numerical values represented in the embodiment are merely examples used for facilitating the understanding of the disclosure, and do not limit the present disclosure unless otherwise particularly noted. Elements having substantially the same functions and configurations herein and in the drawings are denoted by the same reference symbols to omit redundant description thereof. Further, illustration of elements with no direct relationship to the present disclosure is omitted.

### [Hydrogen Production Apparatus 100]

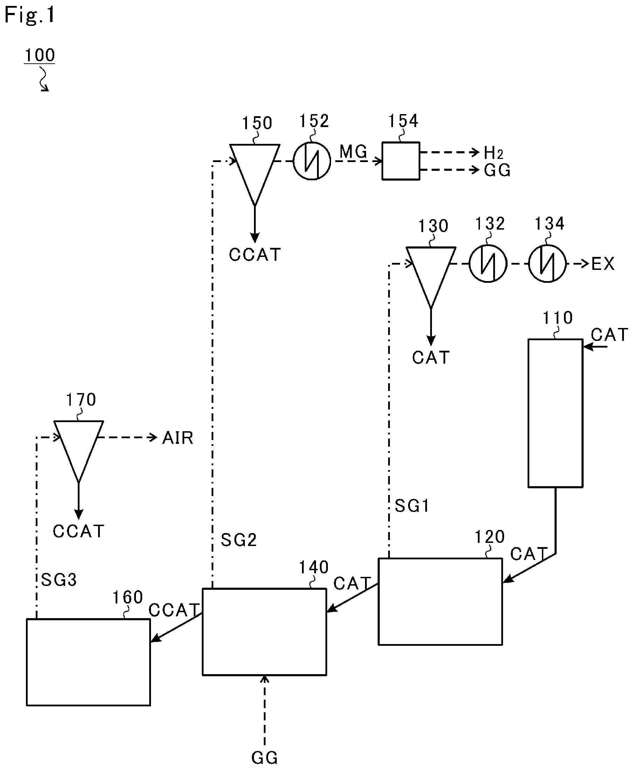

FIG. 1 is a diagram for illustrating a hydrogen production apparatus 100 according to this embodiment. In FIG. 1, the solid arrows each indicate a flow of a solid (solid material). In FIG. 1, the dashed-dotted arrows each indicate a flow of a solid-gas mixture. In FIG. 1, the dashed arrows each indicate a flow of a gas.

As illustrated in FIG. 1, the hydrogen production apparatus 100 includes a first heating furnace 110, a second heating furnace 120, a first cyclone 130, a first raw material heat exchanger 132 (raw material heat exchanger), an air heat exchanger 134, a furnace for the pyrolysis 140, a second cyclone 150, a second raw material heat exchanger 152 (raw material heat exchanger), a hydrogen separation unit 154, a heat exchanger for the heat medium 160, and a third cyclone 170.

The first heating furnace 110 heats a catalyst CAT at normal temperature (e.g., 25°C) to, for example, about 400°C. The catalyst CAT is a catalyst that accelerates the pyrolysis represented by the following formula (1).

CH_{4→}C+2H₂ ··· Formula (1)

The catalyst CAT is formed of any one or more of iron, nickel, copper, and aluminum. In this embodiment, the catalyst CAT is a natural mineral, for example, iron ore. The catalyst CAT is not needed to be a natural mineral as long as the catalyst CAT contains any one or more of copper and aluminum. The particle size of the catalyst CAT is, for example, 50 um or more and 1,000 µm or less, preferably 100 um or more and 300 µm or less.

The second heating furnace 120 further heats the catalyst CAT (about 400°C) heated by the first heating furnace 110 to, for example, about 900°C. The first cyclone 130 separates a solid-gas mixture SG1 of the catalyst CAT and an exhaust gas EX into a solid and a gas. The solid-gas mixture SG1 is the one generated in the second heating furnace 120. The first raw material heat exchanger 132 subjects the exhaust gas EX separated by the first cyclone 130 and a raw material gas GG described later to heat exchange. The air heat exchanger 134 subjects the exhaust gas EX separated by the first cyclone 130 and air to heat exchange.

The furnace for the pyrolysis 140 brings the catalyst CAT (about 900°C) heated by the second heating furnace 120 into contact with the raw material gas GG to allow the pyrolysis of the above-mentioned formula (1) to progress. The raw material gas GG contains at least hydrocarbon (e.g., methane). The raw material gas GG is, for example, a liquefied natural gas (LNG).

The second cyclone 150 separates a solid-gas mixture SG2 of a catalyst (hereinafter sometimes referred to as "adhered catalyst CCAT") having solid carbon adhering thereto, and hydrogen (H₂) and the raw material gas GG into a solid and a gas. The solid-gas mixture SG2 is the one generated in the furnace for the pyrolysis 140. The second raw material heat exchanger 152 subjects a mixed gas MG (hydrogen and raw material gas GG) separated by the second cyclone 150 and the raw material gas GG to heat exchange. The hydrogen separation unit 154 separates the mixed gas MG into the hydrogen and the raw material gas.

The heat exchanger for the heat medium 160 subjects the adhered catalyst CCAT discharged from the furnace for the pyrolysis 140 and a heat medium to heat exchange. The third cyclone 170 separates a solid-gas mixture SG3 of the adhered catalyst CCAT and air into a solid and a gas. The solid-gas mixture SG3 is the one discharged from the heat exchanger for the heat medium 160.

The first heating furnace 110, the second heating furnace 120, the furnace for the pyrolysis 140, and the heat exchanger for the heat medium 160 are described in detail below.

### [First Heating Furnace 110, Second Heating Furnace 120]

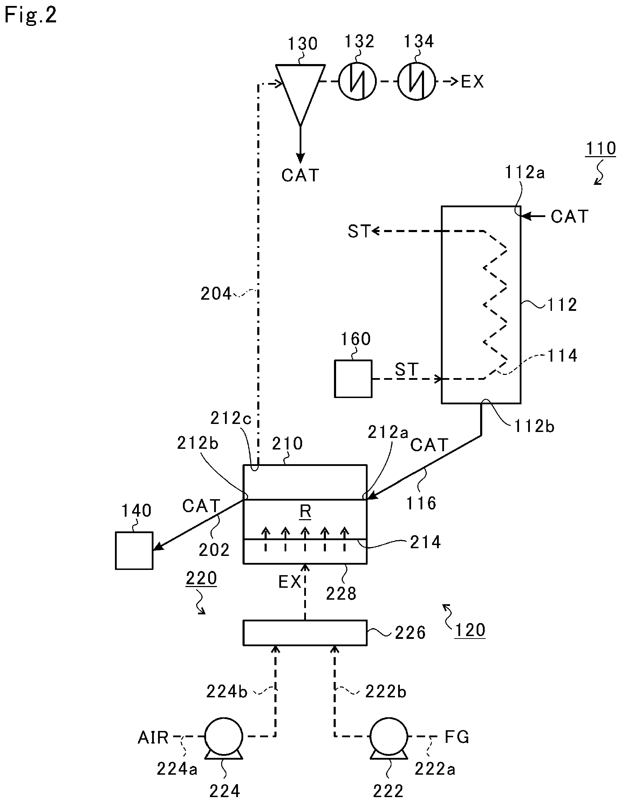

FIG. 2 is a diagram for illustrating the first heating furnace 110 and the second heating furnace 120 according to this embodiment. In FIG. 2, the solid arrows each indicate a flow of a solid (solid material). In FIG. 2, the dashed-dotted arrow indicates a flow of a solid-gas mixture. In FIG. 2, the dashed arrows each indicate a flow of a gas.

As illustrated in FIG. 2, the first heating furnace 110 includes a first accommodating tank 112 and a heating tube 114. The first accommodating tank 112 is a container in which a moving bed of the catalyst CAT is formed. An inlet 112a is formed in an upper portion of the first accommodating tank 112. An outlet 112b is formed in a lower portion of the first accommodating tank 112. The catalyst CAT is guided into the first accommodating tank 112 through the inlet 112a. The catalyst CAT in the first accommodating tank 112 is discharged from the first accommodating tank 112 through the outlet 112b. Thus, the catalyst CAT moves inside the first accommodating tank 112 from the upper portion to the lower portion by its own weight. As a result, a moving bed of the catalyst CAT is formed in the first accommodating tank 112. The moving bed refers to a state in which solid particles are allowed to move downward by gravity.

The heating tube 114 is provided in the first accommodating tank 112. The heating tube 114 is a tube through which the heat medium passes. In this embodiment, the heat medium is steam ST. In addition, the steam ST generated by the heat exchanger for the heat medium 160 described later is guided to the heating tube 114. In a passing process of the steam ST in the heating tube 114, heat exchange is performed between the steam ST and the catalyst CAT via a partition wall forming the heating tube 114. As a result, the catalyst CAT is heated to about 400°C.

The catalyst CAT heated by the first heating furnace 110 is guided to the second heating furnace 120 through a pipe 116 connected to the outlet 112b. The pipe 116 connects the outlet 112b of the first accommodating tank 112 and an inlet 212a of a second accommodating tank 210 to each other.

### [Second Heating Furnace 120]

The second heating furnace 120 is, for example, a bubble fluidized bed (bubbling fluidized bed) furnace. The fluidized bed refers to a state in which solid particles are suspended and floated in a fluid by jetting the fluid upward. In the fluidized bed, the force of the fluid acting on the solid particles and the gravity force are balanced, and the fluidized bed behaves like a uniform fluid as a whole. The second heating furnace 120 fluidizes the catalyst CAT guided from the first heating furnace 110 with the exhaust gas EX.

As illustrated in FIG. 2, the second heating furnace 120 includes the second accommodating tank 210 and an exhaust gas supply unit 220.

The second accommodating tank 210 is a container in which a fluidized bed R of the catalyst CAT discharged from the first heating furnace 110 is formed. The inlet 212a is formed on one side wall of the second accommodating tank 210. An outlet 212b is formed on another side wall of the second accommodating tank 210. In addition, an outlet 212c is formed on an upper surface of the second accommodating tank 210. The pipe 116 is connected to the inlet 212a. A pipe 202 is connected to the outlet 212b. The pipe 202 connects the outlet 212b of the second accommodating tank 210 and an inlet 312a of a third accommodating tank 310 of the furnace for the pyrolysis 140 described later to each other. A pipe 204 is connected to the outlet 212c. The pipe 204 connects the outlet 212c and the first cyclone 130 to each other. In addition, a bottom surface of the second accommodating tank 210 is formed of an air-permeable distributing plate 214.

The exhaust gas supply unit 220 supplies the exhaust gas EX from a lower portion of the second accommodating tank 210. In this embodiment, the exhaust gas supply unit 220 includes a compressor 222, a compressor 224, a burner 226, and a wind box 228.

The compressor 222 supplies a fuel gas FG (e.g., methane) to the burner 226. A suction side of the compressor 222 is connected to a supply source of the fuel gas FG through a fuel supply tube 222a. An ejection side of the compressor 222 is connected to the burner 226 through a fuel feed tube 222b. The fuel gas FG may be the raw material gas GG.

The compressor 224 supplies air to the burner 226. A suction side of the compressor 224 is connected to a supply source of air through an air supply tube 224a. An ejection side of the compressor 224 is connected to the burner 226 through an air feed tube 224b.

The burner 226 burns the fuel gas FG to generate the exhaust gas EX. The exhaust gas EX (e.g., more than 900°C) generated by the burner 226 is supplied to the wind box 228.

The wind box 228 is provided below the second accommodating tank 210. An upper portion of the wind box 228 is formed of the distributing plate 214. In other words, the distributing plate 214 separates the second accommodating tank 210 and the wind box 228 from each other. The exhaust gas EX supplied from the burner 226 to the wind box 228 is supplied into the second accommodating tank 210 from the bottom surface (distributing plate 214) of the second accommodating tank 210.

Accordingly, the catalyst CAT introduced from the first heating furnace 110 through the inlet 212a is fluidized with the exhaust gas EX, and the fluidized bed R (bubble fluidized bed) is formed in the second accommodating tank 210. In addition, in the second accommodating tank 210, the catalyst CAT and the exhaust gas EX are brought into contact with each other, and thus heat exchange is performed between the catalyst CAT and the exhaust gas EX. As a result, the second heating furnace 120 heats the catalyst CAT to, for example, about 900°C.

Thus, the heated catalyst CAT is guided to the furnace for the pyrolysis 140 through the outlet 212b and the pipe 202.

In addition, the exhaust gas EX after heating the catalyst CAT is guided to the first cyclone 130 through the outlet 212c and the pipe 204 together with a part of the catalyst CAT. As described above, the first cyclone 130 separates the solid-gas mixture SG1 containing the catalyst CAT and the exhaust gas EX into a solid and a gas. The catalyst CAT separated by the first cyclone 130 is returned to the first heating furnace 110.

The first raw material heat exchanger 132 subjects the exhaust gas EX separated by the first cyclone 130 and the raw material gas GG to heat exchange. The first raw material heat exchanger 132 subjects the raw material gas GG subjected to heat exchange by the second raw material heat exchanger 152 and the exhaust gas EX to heat exchange. As a result, the raw material gas GG is heated, and the exhaust gas EX is heat-removed. The raw material gas GG heated by the first raw material heat exchanger 132 is supplied to the furnace for the pyrolysis 140 described later. Meanwhile, the heat-removed exhaust gas EX is guided to the air heat exchanger 134.

The air heat exchanger 134 subjects the exhaust gas EX after being subjected to heat exchange by the first raw material heat exchanger 132 and air to heat exchange. As a result, the air is heated, and the exhaust gas EX is heat-removed. The heated air is supplied to the burner 226 as the fuel gas FG. In addition, the heat-removed exhaust gas EX is supplied to the burner 226.

### [Furnace for the Pyrolysis 140]

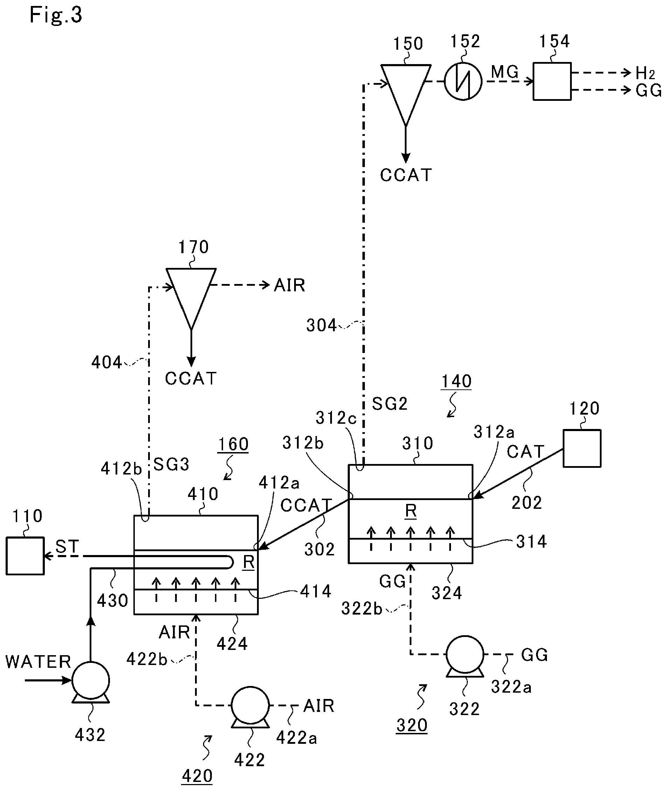

FIG. 3 is a diagram for illustrating the furnace for the pyrolysis 140 and the heat exchanger for the heat medium 160 according to this embodiment. In FIG. 3, the solid arrows each indicate a flow of a solid (solid material) or a flow of a liquid. In FIG. 3, the dashed-dotted arrows each indicate a flow of a solid-gas mixture. In FIG. 3, the dashed arrows each indicate a flow of a gas.

The furnace for the pyrolysis 140 is, for example, a bubble fluidized bed (bubbling fluidized bed) furnace. The furnace for the pyrolysis 140 fluidizes the catalyst CAT guided from the second heating furnace 120 with the raw material gas GG. As illustrated in FIG. 3, the furnace for the pyrolysis 140 includes the third accommodating tank 310 and a raw material gas supply unit 320.

The third accommodating tank 310 is a container in which a fluidized bed R of the catalyst CAT discharged from the second heating furnace 120 is formed.

The inlet 312a is formed on one side wall of the third accommodating tank 310. An outlet 312b is formed on another side wall of the third accommodating tank 310. In addition, an outlet 312c is formed on an upper surface of the third accommodating tank 310. The pipe 202 is connected to the inlet 312a. A pipe 302 is connected to the outlet 312b. The pipe 302 connects the outlet 312b of the third accommodating tank 310 and an inlet 412a of a fourth accommodating tank 410 of the heat exchanger for the heat medium 160 described later to each other. A pipe 304 is connected to the outlet 312c. The pipe 304 connects the outlet 312c and the second cyclone 150 to each other. In addition, a bottom surface of the third accommodating tank 310 is formed of an air-permeable distributing plate 314.

The raw material gas supply unit 320 supplies the raw material gas GG from a lower portion of the third accommodating tank 310. In this embodiment, the raw material gas supply unit 320 includes a compressor 322 and a wind box 324.

The compressor 322 supplies the raw material gas GG to the wind box 324. In this embodiment, the compressor 322 supplies the wind box 324 with the raw material gas GG subjected to heat exchange by the second raw material heat exchanger 152 and the first raw material heat exchanger 132. A suction side of the compressor 322 is connected to a supply source of the raw material gas GG through a raw material gas supply tube 322a. An ejection side of the compressor 322 is connected to the wind box 324 through a raw material gas feed tube 322b.

The second raw material heat exchanger 152 subjects the raw material gas GG passing through the raw material gas supply tube 322a and the mixed gas MG to heat exchange. The raw material gas GG passing through the raw material gas supply tube 322a is the one supplied from the supply source to the raw material gas supply tube 322a. In addition, the first raw material heat exchanger 132 subjects the raw material gas GG passing through the raw material gas supply tube 322a and the exhaust gas EX to heat exchange. The raw material gas GG passing through the raw material gas supply tube 322a is the raw material gas GG after being subjected to heat exchange by the second raw material heat exchanger 152.

The wind box 324 is provided below the third accommodating tank 310. An upper portion of the wind box 324 is formed of the distributing plate 314. In other words, the distributing plate 314 separates the third accommodating tank 310 and the wind box 324 from each other. The raw material gas GG supplied from the compressor 322 to the wind box 324 is supplied into the third accommodating tank 310 from the bottom surface (distributing plate 314) of the third accommodating tank 310.

Accordingly, the catalyst CAT at a high temperature (e.g., about 900°C) introduced from the second heating furnace 120 through the inlet 312a is fluidized with the raw material gas GG, and the fluidized bed R (bubble fluidized bed) is formed in the third accommodating tank 310. In addition, the furnace for the pyrolysis 140 subjects the raw material gas GG to pyrolysis with the heat of the fluidized bed R (catalyst CAT). That is, the pyrolysis represented by the above-mentioned formula (1) progresses in the third accommodating tank 310.

Thus, in the furnace for the pyrolysis 140, the solid-gas mixture SG2 containing the mixed gas MG, which contains hydrogen and unreacted raw material gas GG, and the adhered catalyst CCAT is generated. The solid-gas mixture SG2 generated in the furnace for the pyrolysis 140 is guided to the second cyclone 150 through the outlet 312c and the pipe 304. As described above, the second cyclone 150 separates the solid-gas mixture SG2 into a solid and a gas. The adhered catalyst CCAT separated by the second cyclone 150 is fed to a solid carbon utilization facility in a subsequent stage. Examples of the solid carbon utilization facility include a facility that utilizes a carbon nanotube, carbon black, or graphite, a facility that utilizes solid carbon as a building material, a facility that utilizes solid carbon as a road pavement material, and a facility that stores solid carbon.

The second raw material heat exchanger 152 subjects the mixed gas MG separated by the second cyclone 150 and the raw material gas GG to heat exchange. The second raw material heat exchanger 152 subjects the raw material gas GG supplied from the supply source and the mixed gas MG to heat exchange. As a result, the raw material gas GG is heated, and the mixed gas MG is heat-removed. The raw material gas GG heated by the second raw material heat exchanger 152 is further heated by the first raw material heat exchanger 132, and then, supplied to the furnace for the pyrolysis 140. Meanwhile, the heat-removed mixed gas MG is guided to the hydrogen separation unit 154.

The hydrogen separation unit 154 separates hydrogen from the mixed gas MG gas. The hydrogen separation unit 154 is, for example, a device utilizing pressure swing adsorption (PSA) or a cryogenic separation device. The hydrogen separated by the hydrogen separation unit 154 is fed to a hydrogen utilization facility in a subsequent stage. In addition, the unreacted raw material gas GG generated by removing hydrogen by the hydrogen separation unit 154 is joined to the raw material gas GG (e.g., the raw material gas GG before being subjected to heat exchange by the second raw material heat exchanger 152) passing through the raw material gas supply tube 322a.

### [Heat Exchanger for the Heat Medium 160]

The heat exchanger for the heat medium 160 recovers the heat of the adhered catalyst CCAT guided from the furnace for the pyrolysis 140. As illustrated in FIG. 3, the heat exchanger for the heat medium 160 according to this embodiment includes the fourth accommodating tank 410, an air supply unit 420, a heating tube 430, and a pump 432.

The fourth accommodating tank 410 is a container in which a fluidized bed R of the adhered catalyst CCAT discharged from the furnace for the pyrolysis 140 is formed.

The inlet 412a is formed on one side wall of the fourth accommodating tank 410. In addition, an outlet 412b is formed on an upper surface of the fourth accommodating tank 410. The pipe 302 is connected to the inlet 412a. A pipe 404 is connected to the outlet 412b. The pipe 404 connects the outlet 412b and the third cyclone 170 to each other. In addition, a bottom surface of the fourth accommodating tank 410 is formed of an air-permeable distributing plate 414.

The air supply unit 420 supplies air from a lower portion of the fourth accommodating tank 410. In this embodiment, the air supply unit 420 includes a compressor 422 and a wind box 424.

The compressor 422 supplies air to the wind box 424. A suction side of the compressor 422 is connected to a supply source of the air through an air supply tube 422a. An ejection side of the compressor 422 is connected to the wind box 424 through an air feed tube 422b.

The wind box 424 is provided below the fourth accommodating tank 410. An upper portion of the wind box 424 is formed of the distributing plate 414. In other words, the distributing plate 414 separates the fourth accommodating tank 410 and the wind box 424 from each other. The air supplied from the compressor 422 to the wind box 424 is supplied into the fourth accommodating tank 410 from the bottom surface (distributing plate 414) of the fourth accommodating tank 410.

Accordingly, the adhered catalyst CCAT at a high temperature (e.g., about 500°C) introduced from the furnace for the pyrolysis 140 through the inlet 412a is fluidized with the air, and the fluidized bed R (bubble fluidized bed) is formed in the fourth accommodating tank 410.

The heating tube 430 is provided in the fourth accommodating tank 410. The heating tube 430 is a tube through which the heat medium (water and steam ST) passes. The pump 432 supplies water to the heating tube 430. In a passing process of the water in the heating tube 430, heat exchange is performed between the water and the adhered catalyst CCAT via a partition wall forming the heating tube 430. As a result, the water is heated to about 260°C to become the steam ST. Thus, the steam ST generated in the fourth accommodating tank 410 (heating tube 430) is guided to the heating tube 114 of the first heating furnace 110 to pass through the heating tube 114.

In addition, the solid-gas mixture SG3 is guided to the third cyclone 170 through the pipe 404. The solid-gas mixture SG3 contains the air used for fluidizing the adhered catalyst CCAT in the fourth accommodating tank 410 and the adhered catalyst CCAT. As described above, the third cyclone 170 separates the solid-gas mixture SG3 into a solid and a gas. The air separated by the third cyclone 170 is discarded outside. In addition, the adhered catalyst CCAT separated by the third cyclone 170 is fed to a solid carbon utilization facility in a subsequent stage.

As described above, the hydrogen production apparatus 100 according to this embodiment includes the first heating furnace 110, the second heating furnace 120, and the furnace for the pyrolysis 140. Thus, the hydrogen production apparatus 100 can subject methane (hydrocarbon) to pyrolysis with the heat of the catalyst CAT heated by the first heating furnace 110 and the second heating furnace 120.

In addition, in the hydrogen production apparatus 100, the heated catalyst CAT is introduced into the furnace for the pyrolysis 140 (into the third accommodating tank 310). Thus, the inside of the third accommodating tank 310 is substantially uniformly heated with the catalyst CAT. Accordingly, the hydrogen production apparatus 100 is not needed to heat the furnace for the pyrolysis 140 from outside. As a result, in the hydrogen production apparatus 100, a furnace wall of the furnace for the pyrolysis 140 is not needed to be formed of a material having a heat resistance of 1,000°C or more. Thus, the hydrogen production apparatus 100 can reduce the manufacturing cost of the furnace for the pyrolysis 140. Accordingly, the hydrogen production apparatus 100 can subject methane (hydrocarbon) to pyrolysis at low cost. In other words, the hydrogen production apparatus 100 can produce hydrogen at low cost.

In addition, with the conventional technology for heating the inside of the furnace for the pyrolysis from outside, it is difficult to make the internal temperature of the furnace for the pyrolysis uniform, and it is difficult to increase the size of the furnace for the pyrolysis. Meanwhile, the hydrogen production apparatus 100 can make the temperature in the third accommodating tank 310 uniform as compared to the conventional technology for heating the inside of the furnace for the pyrolysis from outside. Thus, the hydrogen production apparatus 100 can avoid the situation in which the temperature of the catalyst CAT is locally decreased in the third accommodating tank 310. Accordingly, the hydrogen production apparatus 100 can efficiently subject methane (hydrocarbon) to pyrolysis. In addition, the hydrogen production apparatus 100 can make the temperature in the third accommodating tank 310 uniform, and hence the size of the third accommodating tank 310 can also be increased. Thus, the hydrogen production apparatus 100 can produce a large amount of hydrogen at low cost.

In addition, as described above, the furnace for the pyrolysis 140 subjects the raw material gas GG to pyrolysis to generate hydrogen and solid carbon. Thus, the hydrogen production apparatus 100 can produce hydrogen without emitting carbon dioxide derived from the raw material gas GG.

In addition, as described above, the hydrogen production apparatus 100 includes the heat exchanger for the heat medium 160 that recovers the heat of the adhered catalyst CCAT that has been used in the furnace for the pyrolysis 140. Then, the first heating furnace 110 heats the catalyst CAT with the heat recovered by the heat exchanger for the heat medium 160. Thus, the hydrogen production apparatus 100 can reduce the amount of fuel needed in the second heating furnace 120 for heating the catalyst CAT to a desired temperature (e.g., 900°C). Accordingly, the hydrogen production apparatus 100 can heat the catalyst CAT at low cost.

In addition, as described above, the hydrogen production apparatus 100 includes the first raw material heat exchanger 132 and the second raw material heat exchanger 152. Further, the raw material gas supply unit 320 supplies the raw material gas GG heated by the first raw material heat exchanger 132 and the second raw material heat exchanger 152, to the furnace for the pyrolysis 140 (third accommodating tank 310). That is, the hydrogen production apparatus 100 can preheat the raw material gas GG to be supplied to the furnace for the pyrolysis 140. Thus, the hydrogen production apparatus 100 can suppress a decrease in temperature of the furnace for the pyrolysis 140. Accordingly, the hydrogen production apparatus 100 can reduce the heating amount (amount of fuel) of the catalyst CAT in the second heating furnace 120. In addition, the hydrogen production apparatus 100 can suppress non-uniformity of the temperature in the furnace for the pyrolysis 140. Accordingly, the hydrogen production apparatus 100 can efficiently subject methane (hydrocarbon) to pyrolysis.

The embodiment has been described above with reference to the attached drawings, but, needless to say, the present disclosure is not limited to the embodiment. It is apparent that those skilled in the art may arrive at various alterations and modifications within the scope of claims, and those examples are construed as naturally falling within the technical scope of the present disclosure.

For example, in the above-described embodiment, there has been given, as an example, the case in which the hydrogen production apparatus 100 includes the heat exchanger for the heat medium 160. However, the heat exchanger for the heat medium 160 is not a mandatory component. For example, the adhered catalyst CCAT discharged from the furnace for the pyrolysis 140 may be fed as it is to the solid carbon utilization facility in the subsequent stage or may be left in the atmosphere.

In addition, in the above-mentioned embodiment, there has been given, as an example, the case in which the hydrogen separated by the hydrogen separation unit 154 is fed to the hydrogen utilization facility in the subsequent stage. However, the hydrogen separated by the hydrogen separation unit 154 may be supplied to the burner 226 of the second heating furnace 120. In this case, the burner 226 of the second heating furnace 120 uses the hydrogen separated by the hydrogen separation unit 154 as fuel. Thus, the exhaust gas generated by the second heating furnace 120 does not contain carbon dioxide. Accordingly, the hydrogen production apparatus 100 can prevent the generation of carbon dioxide during heating of the catalyst CAT. Thus, the hydrogen production apparatus 100 can produce hydrogen free of carbon dioxide. The burner 226 may use the hydrogen separated by the hydrogen separation unit 154 and methane (e.g., the raw material gas GG) as fuel.

In addition, in the above-mentioned embodiment, there has been given, as an example, the case in which the hydrogen production apparatus 100 includes the first raw material heat exchanger 132 and the second raw material heat exchanger 152. However, any one or both of the first raw material heat exchanger 132 and the second raw material heat exchanger 152 may also be omitted.

In addition, in the above-mentioned embodiment, there has been given, as an example, the case in which the entire used adhered catalyst CCAT is fed to the solid carbon utilization facility in the subsequent stage. However, the adhered catalyst CCAT may be supplied again to the first heating furnace 110 to circulate (reuse) the adhered catalyst CCAT. In addition, the adhered catalyst CCAT guided from the furnace for the pyrolysis 140 may be directly guided (recirculated) to the second accommodating tank 210 of the second heating furnace 120 without passing through the heat exchanger for the heat medium 160. In this case, the burner 226 may burn the fuel with air having a theoretical air ratio or less. Thus, the exhaust gas EX supplied to the second accommodating tank 210 of the second heating furnace 120 does not contain oxygen. Accordingly, the situation in which carbon dioxide is generated from the adhered catalyst CCAT in the second heating furnace 120 can be avoided. Thus, the hydrogen production apparatus 100 can produce hydrogen without emitting carbon dioxide derived from the raw material gas GG.

The present disclosure can contribute to, for example, Goal 7 "Ensure access to affordable, reliable, sustainable and modern energy for all" in Sustainable Development Goals (SDGs).

### Reference Signs List

100: hydrogen production apparatus, 110: first heating furnace, 112: first accommodating tank, 114: heating tube, 120: second heating furnace, 132: first raw material heat exchanger (raw material heat exchanger), 140: furnace for the pyrolysis, 152: second raw material heat exchanger (raw material heat exchanger), 154: hydrogen separation unit, 160: heat exchanger for the heat medium, 210: second accommodating tank, 226: burner, 310: third accommodating tank

## Claims

1. A hydrogen production apparatus, comprising:
a first heating furnace including:
a first accommodating tank in which a moving bed of a catalyst containing any one or more of iron, nickel, copper, and aluminum is formed; and
a heating tube, which is provided in the first accommodating tank, and through which a heat medium passes;
a second heating furnace including:
a burner that burns fuel to generate an exhaust gas; and
a second accommodating tank in which a fluidized bed of the catalyst discharged from the first heating furnace is formed with the exhaust gas; and
a furnace for pyrolysis including a third accommodating tank in which a fluidized bed of the catalyst discharged from the second heating furnace is formed with a raw material gas containing hydrocarbon.

2. The hydrogen production apparatus according to claim 1, further comprising a heat exchanger for the heat medium that subjects the catalyst discharged from the third accommodating tank of the furnace for pyrolysis and the heat medium to heat exchange,
wherein the heat medium subjected to heat exchange by the heat exchanger for the heat medium passes through the heating tube of the first heating furnace.

3. The hydrogen production apparatus according to claim 1 or 2, wherein the burner of the second heating furnace uses the raw material gas as the fuel.

4. The hydrogen production apparatus according to any one of claims 1 to 3, further comprising a hydrogen separation unit that separates hydrogen from a mixed gas fed from the third accommodating tank of the furnace for pyrolysis,
wherein the burner of the second heating furnace uses the hydrogen separated by the hydrogen separation unit as the fuel.

5. The hydrogen production apparatus according to any one of claims 1 to 4,
wherein the catalyst discharged from the furnace for pyrolysis is guided to the second accommodating tank of the second heating furnace, and
wherein the burner of the second heating furnace burns the fuel with air having a theoretical air ratio or less.

6. The hydrogen production apparatus according to any one of claims 1 to 5, further comprising a raw material heat exchanger that subjects any one or both of the exhaust gas fed from the second accommodating tank of the second heating furnace and a mixed gas fed from the third accommodating tank of the furnace for pyrolysis and the raw material gas to heat exchange,
wherein the third accommodating tank of the furnace for pyrolysis forms the fluidized bed of the catalyst with the raw material gas subjected to heat exchange by the raw material heat exchanger.
